# EUROPÄISCHE PATENTSCHRIFT

(11) **EP 1 083 331 B1**
(45) Veröffentlichungstag und Bekanntmachung des Hinweises auf die Patenterteilung: **01.06.2005**
(21) Anmeldenummer: 00116671.9
(22) Anmeldetag: 02.08.2000
(51) Int. Cl.: F02M 37/10

(54) **Zur Förderung von Kraftstoff aus einem Kraftstoffbehälter zu einer Brennkraftmaschine eines Kraftfahrzeuges vorgesehene Fördereinrichtung**
Device for supplying fuel from a tank to a combustion engine of a vehicle
Dispositif d'alimentation en carburant d'un moteur à combustion d'un véhicule à partir d'un réservoir

(30) Priorität: 07.09.1999 DE 19942548
(43) Veröffentlichungstag der Anmeldung: 14.03.2001
(73) Patentinhaber: Siemens Aktiengesellschaft, 80333 München (DE)
(72) Erfinder: Sinz, Wolfgang, Dr., 65843 Sulzbach (DE)

(56) Entgegenhaltungen:
- EP-A- 0 777 042
- DE-A- 19 618 707
- FR-A- 2 775 320
- US-A- 4 617 116
- US-A- 5 341 842
- US-A- 5 749 345

## Beschreibung

Die Erfindung betrifft eine zur Förderung von Kraftstoff aus einem Kraftstoffbehälter zu einer Brennkraftmaschine eines Kraftfahrzeuges vorgesehene Fördereinrichtung mit einer Förderpumpe, und mit Mitteln zur Steuerung eines Drucks innerhalb einer von der Förderpumpe zu der Brennkraftmaschine geführten Vorlaufleitung.

Eine solche Fördereinrichtung hat als Mittel zur Steuerung des Drucks eine zwischen der Vorlaufleitung und einer von der Brennkraftmaschine in den Kraftstoffbehälter zurückgeführten Rücklaufleitung angeordnete Drossel und ist aus der Praxis bekannt. Durch die Steuerung des Druckes in der Vorlaufleitung soll sichergestellt werden, daß bei einer hohen Leistungsaufnahme der Brennkraftmaschine ein hoher Druck und beim Start ein geringer Druck in der Vorlaufleitung herrscht. Weiterhin treten bei hohen Volumenströmen Druckverluste innerhalb der Leitungen auf, die durch die Steuerung ausgeglichen werden sollen.

Nachteilig bei der bekannten Fördereinrichtung ist, dass die Drossel insbesondere im Hochlastbereich der Brennkraftmaschine einen vorgesehenen hohen Druck in der Vorlaufleitung häufig nicht zuverlässig halten kann, da Kraftstoff aus der Vorlaufleitung über die Drossel in die einen geringen Druck aufweisende Rücklaufleitung überströmt.

Aus der DE 196 18 707 A1 ist eine Vorrichtung zur Regelung mit einem Druckregelventil bekannt. Das Druckregelventil ist über eine Verbindungsleitung mit der Vorlaufleitung verbunden. Nachteilig bei dieser Anordnung ist der aufwendige Aufbau mit der Anordnung des Druckregelventils außerhalb des Tanks und der zusätzlich erforderlichen Verbindungsleitung zwischen Ventil und Vorlaufleitung.

Der Erfindung liegt das Problem zugrunde, eine Fördereinrichtung der eingangs genannten Art so zu gestalten, dass sie eine besonders genaue Einhaltung des Druckes innerhalb der Vorlaufleitung ermöglicht.

Dieses Problem wird erfindungsgemäß dadurch gelöst, dass die Vorlaufleitung ein von dem Druck innerhalb der Rücklaufleitung ansteuerbares Druckregelventil aufweist und dass das Druckregelventil zum Verschließen oder Freigeben eines von der Vorlaufleitung in den Kraftstoffbehälter führenden Abzweiges gestaltet ist.

Durch diese Gestaltung der erfindungsgemäßen Fördereinrichtung wird der leistungs- und drehzahlabhängige Druck in der Rücklaufleitung genutzt, um den Arbeitspunkt des Druckregelventils einzustellen. Da der Druck in der Rücklaufleitung abhängig vom Lastzustand der Brennkraftmaschine ist, lässt sich hierdurch der Druck in der Vorlaufleitung sehr genau regeln. Bei einem besonders hohen Kraftstoffbedarf kann das Druckregelventil die Verbindung zu dem Abzweig komplett verschließen, so dass der gesamte von der Förderpumpe geförderte Kraftstoff zu der Brennkraftmaschine gelangt.

Meist ist innerhalb des Kraftstoffbehälters eine über einen Abzweig mit der Vorlaufleitung verbundene, zur Förderung von Kraftstoff aus einer Kammer in eine andere Kammer vorgesehene Saugstrahlpumpe angeordnet. Hierbei laßt sich eine Förderung der Saugstrahlpumpe zuverlässig sicherstellen, wenn innerhalb der Rücklaufleitung ein Mischer zur Mischung des über die Rücklaufleitung zurückfließenden Kraftstoffs mit von der Vorlaufleitung abgezweigten, zur Versorgung einer Saugstrahlpumpe vorgesehenen Kraftstoffs angeordnet ist. Die Saugstrahlpumpe erzeugt zudem einen Gegendruck in der Rücklaufleitung, so daß die Steuerung des Druckregelventils und damit der in der Vorlaufleitung geregelte Druck besonders genau ist. Hierbei ermöglicht die erfindungsgemäße Anordnung des Druckregelventils in der Vorlaufleitung, daß bei einem hohen Kraftstoffverbrauch durch die Brennkraftmaschine oder einer geringen Förderleistung der Förderpumpe besonders wenig Kraftstoff über den Abzweig in den Kraftstoffbehälter abfließt.

Bei einer hohen Druckdifferenz zwischen der Vorlaufleitung und der Rücklaufleitung läßt sich ein hoher Druck in der Vorlaufleitung unterhalb eines vorgesehenen Wertes halten, wenn der Mischer ein oberhalb einer vorgesehenen Druckdifferenz zwischen dem von der Vorlaufleitung abgezweigten Kraftstoff und dem über die Rücklaufleitung zurückfließenden Kraftstoff die Rücklaufleitung verschließendes Rückschlagventil aufweist. Durch diese Gestaltung wird eine Ansteuerung des Druckregelventils bei der hohen Druckdifferenz verhindert, so daß das Druckregelventil offen ist und ein Abfließen des Kraftstoffs aus der Vorlaufleitung durch den Abzweig ermöglicht.

Ein vorgesehener Maximaldruck in der Vorlaufleitung läßt sich gemäß einer anderen vorteilhaften Weiterbildung der Erfindung besonders zuverlässig einhalten, wenn die Vorlaufleitung mit einem oberhalb eines vorgesehenen Druckes öffnenden, eine Verbindung mit dem Kraftstoffbehälter aufweisenden Druckbegrenzungsventil verbunden ist.

Emissionen von Kraftstoff in die Umgebung lassen sich gemäß einer anderen vorteilhaften Weiterbildung der Erfindung besonders gering halten, wenn das Druckbegrenzungsventil, das Druckregelventil und das Rückschlagventil zur Anordnung innerhalb des Kraftstoffbehälters vorgesehen sind. Hierdurch sind alle Anschlüsse der erfindungsgemäßen Fördereinrichtung innerhalb des Kraftstoffbehälters angeordnet, so daß Undichtigkeiten nicht zu einem Austritt von Kraftstoff führen.

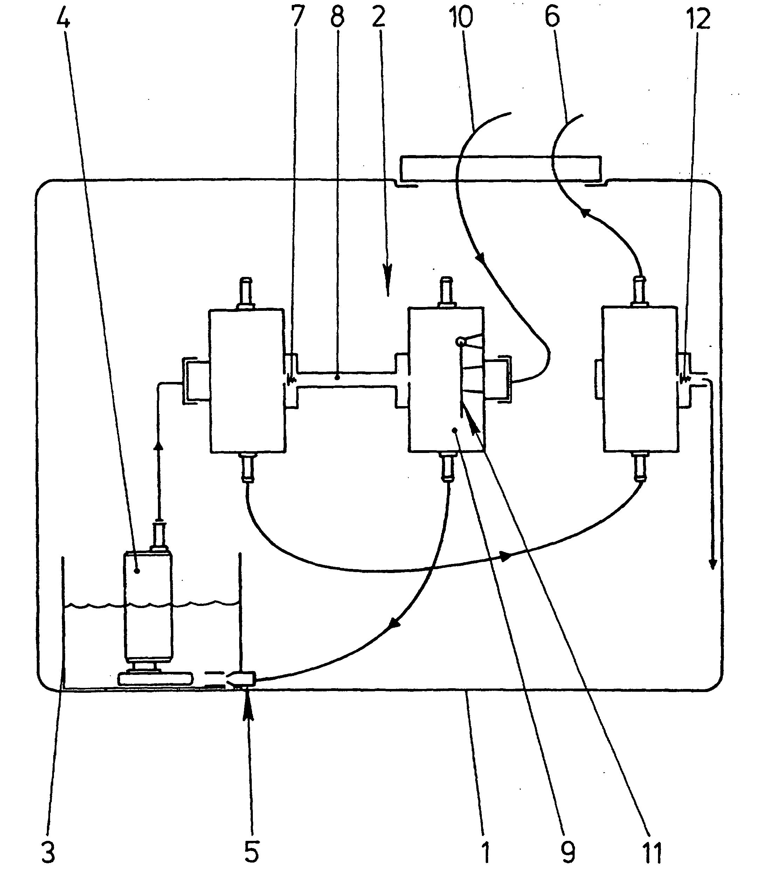

Die Erfindung läßt zahlreiche Ausführungsformen zu. Zur weiteren Verdeutlichung ihres Grundprinzips ist eine davon in der Zeichnung dargestellt und wird nachfolgend beschrieben.

Die Zeichnung zeigt in einer einzigen Figur schematisch eine erfindungsgemäße in einem Kraftstoffbehälter 1 angeordnete Fördereinrichtung 2 für Dieselkraftstoff. Die Fördereinrichtung 2 hat eine in einem Schwalltopf 3 des Kraftstoffbehälters 1 angeordnete Förderpumpe 4. Der Schwalltopf 3 wird über eine im Bodenbereich angeordnete Saugstrahlpumpe 5 mit Kraftstoff befüllt. Die Förderpumpe 4 fördert Kraftstoff über eine Vorlaufleitung 6 zu einer nicht dargestellten Brennkraftmaschine. In der Vorlaufleitung 6 ist ein mittels eines Druckregelventils 7 verschließbarer, zu der Saugstrahlpumpe 5 führender Abzweig 8 angeordnet. Über den Abzweig 8 wird von der Vorlaufleitung 6 abgeführter Kraftstoff in einem Mischer 9 mit Kraftstoff aus einer von der Brennkraftmaschine in den Kraftstoffbehälter 1 zurückgeführten Rücklaufleitung 10 gemischt. Der Anschluß der Rücklaufleitung 10 an dem Mischer 9 hat ein Rückschlagventil 11, welches bei einer vorgesehenen Druckdifferenz zwischen dem Mischer 9 und der Rücklaufleitung 10 schließt. Weiterhin ist in der Vorlaufleitung 6 ein Druckbegrenzungsventil 12 angeordnet. Oberhalb eines vorgesehenen Druckes in der Vorlaufleitung 6 öffnet dieses und ermöglicht ein Ablassen des Kraftstoffs in den Kraftstoffbehälter 1.

## Patentansprüche

1. Zur Förderung von Kraftstoff aus einem Kraftstoffbehälter (1) zu einer Brennkraftmaschine eines Kraftfahrzeuges vorgesehene Fördereinrichtung (2) mit einer Förderpumpe (4), und mit Mitteln zur Steuerung eines Druckes innerhalb einer von der Förderpumpe (4) zu der Brennkraftmaschine geführten Vorlaufleitung (6), wobei die Vorlaufleitung (6) ein von dem Druck innerhalb der Rücklaufleitung (10) ansteuerbares Druckregelventil (7) aufweist und dass das Druckregelventil (7) zum Verschließen oder Freigeben eines von der Vorlaufleitung (6) in den Kraftstoffbehälter (1) führenden Abzweiges (8) gestaltet ist, **dadurch gekennzeichnet, dass** das Druckregelventil (7) zur Anordnung innerhalb des Kraftstoffbehälters (1) vorgesehen ist.

2. Fördereinrichtung nach Anspruch 1, **dadurch gekennzeichnet, daß** innerhalb der Rücklaufleitung (10) ein Mischer (9) zur Mischung des über die Rücklaufleitung (10) zurückfließenden Kraftstoffs mit von der Vorlaufleitung (6) abgezweigten, zur Versorgung einer Saugstrahlpumpe (5) vorgesehenen Kraftstoffs angeordnet ist.

3. Fördereinrichtung nach Anspruch 1 oder 2, **dadurch gekennzeichnet, daß** der Mischer (9) ein oberhalb einer vorgesehenen Druckdifferenz zwischen dem von der Vorlaufleitung (6) abgezweigten Kraftstoff und dem über die Rücklaufleitung (10) zurückfließenden Kraftstoff die Rücklaufleitung (10) verschließendes Rückschlagventil (11) aufweist.

4. Fördereinrichtung nach zumindest einem der vorhergehenden Ansprüche, **dadurch gekennzeichnet, daß** die Vorlaufleitung (6) mit einem oberhalb eines vorgesehenen Druckes öffnenden, eine Verbindung mit dem Kraftstoffbehälter (1) aufweisenden Druckbegrenzungsventil (12) verbunden ist.

5. Fördereinrichtung nach zumindest einem der vorhergehenden Ansprüchen, **dadurch gekennzeichnet, dass** das Druckbegrenzungsventil (12) und das Rückschlagventil (11) zur Anordnung innerhalb des Kraftstoffbehälters (1) vorgesehen sind.

## Claims

1. Feed device (2) intended for feeding fuel out of a fuel tank (1) to an internal combustion engine of a motor vehicle, with a feed pump (4) and with means for controlling a pressure within a forward-flow line (6) led from the feed pump (4) to the internal combustion engine, the forward-flow line (6) having a pressure regulating valve (7) capable of being activated by the pressure within the return-flow line (10), and the pressure regulating valve (7) being designed for closing or opening a branch (8) leading from the forward-flow line (6) into the fuel tank (1), **characterized in that** the pressure regulating valve (7) is intended to be arranged within the fuel tank (1).

2. Feed device according to Claim 1, **characterized in that** a mixer (9) for mixing the fuel flowing back via the return-flow line (10) with fuel branched off from the forward-flow line (6) and intended for supplying a suction jet pump (5) is arranged within the return-flow line (10).

3. Feed device according to Claim 1 or 2, **characterized in that** the mixer (9) has a non-return valve (11) which closes the return-flow line (10) above an intended pressure difference between the fuel branched off from the forward-flow line (6) and the fuel flowing back via the return-flow line (10).

4. Feed device according to at least one of the preceding claims, **characterized in that** the forward-flow line (6) is connected to a pressure limiting valve (12) which opens above an intended pressure and which has a connection to the fuel tank (1).

5. Feed device according to at least one of the preceding claims, **characterized in that** the pressure limiting valve (12) and the non-return valve (11) are intended to be arranged within the fuel tank (1).

## Revendications

1. Système d'alimentation (2) prévu pour transporter du carburant venant d'un réservoir à carburant (1) vers un moteur à combustion interne d'un véhicule automobile et comportant une pompe d'alimentation (4) et des moyens permettant de contrôler une pression à l'intérieur d'une conduite d'alimentation (6) allant de la pompe d'alimentation (4) a u moteur à combustion interne, où la conduite d'alimentation (6) comporte une soupape de régulation de la pression (7) commandée par la pression à l'intérieur de la conduite de reflux (10) et où la soupape de régulation de la pression (7) est conçue pour fermer ou ouvrir une dérivation (8) conduisant de la conduite d'alimentation (6) dans le réservoir à carburant (1), **caractérisé par le fait que** la soupape de régulation de la pression (7) est prévue pour être disposée à l'intérieur du réservoir à carburant (1).

2. Système d'alimentation s elon la revendication 1 **caractérisé par le fait que**, sur la conduite de reflux (10), est disposé un mélangeur (9) destiné à mélanger le carburant revenant par l'intermédiaire de la conduite de reflux (10) avec le carburant dérivé de la conduite d'alimentation (6) et prévu pour alimenter une pompe à jet aspirant (5).

3. Système d'alimentation selon la revendication 1 ou 2 **caractérisé par le fait que** le mélangeur (9) comporte un clapet de non-retour (11) fermant la conduite de reflux (10) au-dessus d'une différence de pression prévue entre le carburant dérivé de la conduite d'alimentation (6) et le carburant revenant par l'intermédiaire de la conduite de reflux (10).

4. Système d'alimentation selon au moins l'une des revendications précédentes **caractérisé par le fait que** la conduite d'alimentation (6) est reliée à une soupape de limitation de la p ression (12), q ui ouvre a u-dessus d'une pression donnée et qui a une liaison avec le réservoir à carburant (1).

5. Système d'alimentation selon au moins l'une des revendications précédentes **caractérisé par le fait que** la soupape de limitation de la pression (12) et le clapet de non-retour (11) sont prévus pour être disposés à l'intérieur du réservoir à carburant (1).
